# EUROPEAN PATENT APPLICATION

(11) **EP 4 744 981 A1**
(43) Date of publication of application: **20.05.2026**
(21) Application number: 25207691.4
(22) Date of filing: 09.10.2025
(51) Int. Cl.: B60T 13/16, B60T 13/68, B66F 9/00

(54) **HYDRAULIC BRAKE SYSTEM FOR INDUSTRIAL VEHICLE**

(30) Priority: 05.11.2024 JP 2024193806
(71) Applicant: KABUSHIKI KAISHA TOYOTA JIDOSHOKKI, Kariya-shi, Aichi 448-8671 (JP)
(72) Inventor: MASUDA, Hideo, Kariya-shi, 448-8671 (JP)
(74) Representative: TBK

(57) **Abstract**

A hydraulic brake system (10, 100, 200, 300) for an industrial vehicle includes a master cylinder (12) having a brake pedal (19), a brake device (13), and a master cylinder fluid passage. The hydraulic brake system (10, 100, 200, 300) includes a control valve (14, 101, 201, 301) disposed in the master cylinder fluid passage, an actuator (15), an actuator fluid passage, a first solenoid valve (34, 103, 203) provided in the control valve (14, 101, 201, 301), a second solenoid valve (36) provided in the control valve (14, 101, 201, 301), a controller (28) configured to control the first solenoid valve (34, 103, 203), and the second solenoid valve (36). When braking is performed during manual operation, the controller (28) controls the first solenoid valve (34, 103, 203) to open the master cylinder fluid passage, and the second solenoid valve (36) to close the actuator fluid passage. When braking is performed during automated operation, the controller (28) controls the second solenoid valve (36) to open the actuator fluid passage, and the first solenoid valve (34, 103, 203) to close the master cylinder fluid passage.

## Description

### BACKGROUND ART

The present invention relates to a hydraulic brake system for an industrial vehicle.

As a conventional technique relating to a hydraulic brake system for an industrial vehicle, for example, a brake fluid pressure control device disclosed in Japanese Patent Application Publication No. 2000-085560 has been known. The brake fluid pressure control device disclosed in the Publication includes a control piston that receives fluid pressure generated by a master cylinder, a control valve that controls fluid pressure of a fluid pressure source with respect to the fluid pressure acting on the control piston, and a brake device that operates with the fluid pressure controlled by the control valve.

The hydraulic brake system as disclosed in the Publication is known. In order to enable automated operation without an operator in an industrial vehicle configured to be capable of manual operation, it is necessary to provide a means for automatedly generating braking force in a brake device that is configured to generate braking force through brake pedal operation. That is, in an industrial vehicle configured to switch between the manual operation and the automated operation, it is necessary to implement a hydraulic brake system that can apply braking force to the brake device both by the brake pedal operation and by automated control of an actuator. In this case, for example, it is considered that the actuator, which is automatedly controlled, is configured to press the brake pedal during automated operation, but the actuator would interfere with brake pedal operation during the manual operation. In addition, it is difficult to adjust the braking force of the brake device when the actuator operates the brake pedal.

The present invention, which has been made in view of the above problems, is directed to providing a hydraulic brake system for an industrial vehicle in which a brake device can be appropriately operated regardless of whether operation of the industrial vehicle is switched to the manual operation or the automated operation.

### SUMMARY

In accordance with an aspect of the present invention, there is provided a hydraulic brake system for an industrial vehicle. The hydraulic brake system includes a master cylinder having a brake pedal, and configured to discharge hydraulic fluid in accordance with a depressed amount of the brake pedal to output the hydraulic pressure; a brake device configured to brake a wheel using hydraulic pressure; a master cylinder fluid passage connecting the master cylinder and the brake device. The hydraulic brake system includes: a control valve disposed in the master cylinder fluid passage; an actuator that outputs the hydraulic pressure; an actuator fluid passage that extends from the actuator to the master cylinder fluid passage through the control valve; a first solenoid valve provided in the control valve and configured to open and close the master cylinder fluid passage; a second solenoid valve provided in the control valve, and configured to open and close the actuator fluid passage; a controller configured to control the first solenoid valve, and the second solenoid valve, when braking is performed during manual operation, the controller controls the first solenoid valve to open the master cylinder fluid passage, and the second solenoid valve to close the actuator fluid passage, and when braking is performed during automated operation, the controller controls the second solenoid valve to open the actuator fluid passage, and the first solenoid valve to close the master cylinder fluid passage.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic configuration view of a hydraulic brake system for a forklift truck according to a first embodiment of the present invention;
FIG. 2A is a schematic view of a first solenoid valve, and FIG. 2B is a schematic view of a second solenoid valve;
FIG. 3A is a schematic view of a first check valve, and FIG. 3B is a schematic view of a second check valve;
FIG. 4 is a schematic configuration view of the hydraulic brake system, illustrating a state in which a braking force is generated by a master cylinder;
FIG. 5 is a graph showing relationships between an amount of fluid supplied from the actuator and time, an opening degree of the second check valve and time, an opening degree of the second solenoid valve and time, and an amount of fluid supplied to the brake device and time;
FIG. 6 is a schematic configuration view of the hydraulic brake system, illustrating a state in which the second check valve is opened by operation of the actuator;
FIG. 7 is a schematic configuration view of a hydraulic brake system for a forklift truck according to a second embodiment of the present invention;
FIG. 8 is a graph showing relationships between an amount of fluid supplied from a master cylinder and time, an opening degree of a first check valve and time, an opening degree of a first solenoid valve and time, and an amount of fluid supplied to the brake device and time;
FIG. 9 is a schematic configuration view of the hydraulic brake system, illustrating a state in which the first check valve is opened by operation of the master cylinder;
FIG. 10 is a schematic configuration view of a hydraulic brake system for a forklift truck according to a third embodiment of the present invention;
FIG. 11 is a schematic configuration view of the hydraulic brake system, illustrating a state in which a first solenoid valve and a second solenoid valve are closed, and a third solenoid valve is opened;
FIG. 12 is a schematic configuration view of a hydraulic brake system for a forklift truck according to a modification of the third embodiment; and

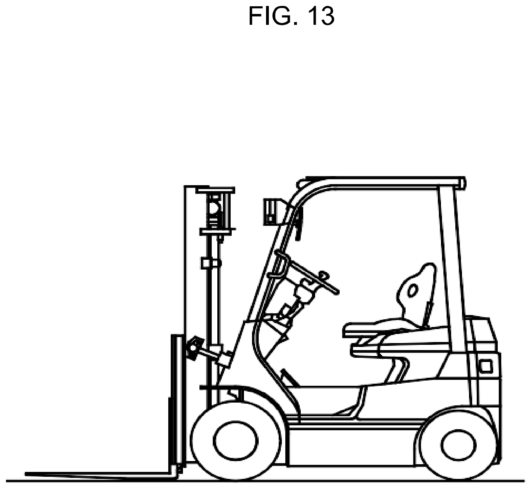

FIG. 13 is a schematic view of a forklift truck.

### DETAILED DESCRIPTION OF THE EMBODIMENTS

### First embodiment

The following will describe a hydraulic brake system for an industrial vehicle according to a first embodiment with reference to the accompanying drawings. The industrial vehicle of the present embodiment is a forklift truck, and the hydraulic brake system for the forklift truck will be described.

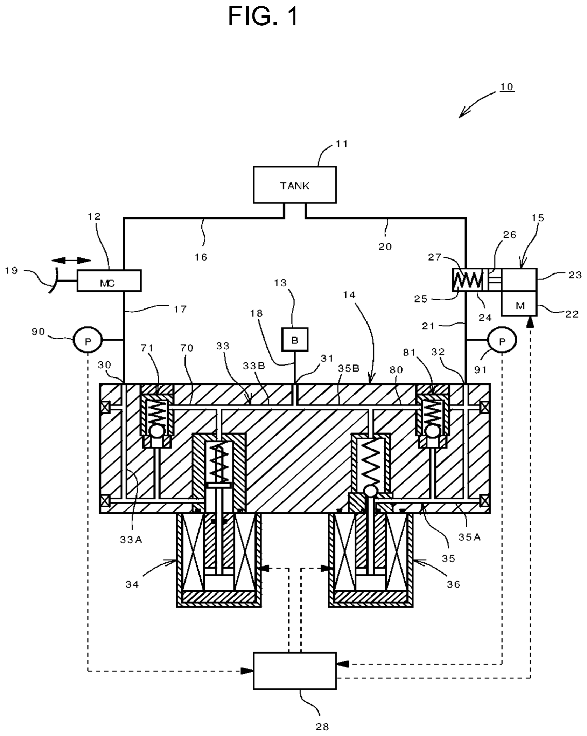

As illustrated in FIG. 1, a hydraulic brake system 10 for a forklift truck (hereinafter referred to as "hydraulic brake system") includes a hydraulic fluid tank 11, a master cylinder 12, a brake device 13, a control valve 14, and an actuator 15. The hydraulic fluid tank 11 is a tank in which hydraulic fluid is stored. The master cylinder 12 is connected to the hydraulic fluid tank 11 by a pipe 16 and also to the control valve 14 by a pipe 17. The control valve 14 is connected to the brake device 13 by a pipe 18.

The master cylinder 12 includes a brake pedal 19 and is configured to output hydraulic pressure in accordance with a depressed amount of the brake pedal 19. When the forklift truck is operated manually (manual operation), the master cylinder 12 outputs hydraulic pressure to the brake device 13 via the control valve 14 in response to the operation of the brake pedal 19 by an operator, thereby generating braking force in the brake device 13.

In the brake device 13, the braking force to stop rotation of wheels (not illustrated) of the forklift truck in accordance with the hydraulic pressure output by the master cylinder 12 or the actuator 15 is generated. The brake device 13 of the forklift truck is, for example, a wet brake provided on a front axle of a vehicle body, but may also be a drum brake or a disc brake.

The actuator 15 is connected to the hydraulic fluid tank 11 by a pipe 20 and also to the control valve 14 by a pipe 21. The actuator 15 generates hydraulic pressure by mechanically outputting hydraulic fluid. The actuator 15 of the present embodiment is an electric hydraulic cylinder, and includes an electric motor 22, a conversion mechanism 23 that converts the rotation of the electric motor 22 into linear motion, a cylinder 24 provided with a fluid chamber 25, and a piston 26 reciprocally movable inside the cylinder 24. The fluid chamber 25 accommodates a coil spring 27 as an urging member that returns the piston 26 to its original position. In the actuator 15, when the electric motor 22 drives the piston 26 to move forward to pressurize the hydraulic fluid in the fluid chamber 25, the hydraulic fluid is discharged. The electric motor 22 is electrically connected to and controlled by a controller 28. The controller 28, although not illustrated, is equipped with a central processing unit (CPU) that performs various processing operations and a memory unit that stores programs and data. The controller 28 controls various components of the forklift truck and receives signals from various sensors.

The control valve 14 has a master cylinder port 30 to which the pipe 17 is connected, a brake port 31 to which the pipe 18 is connected, and an actuator port 32 to which the pipe 21 is connected. The master cylinder port 30 , the brake port 31, and the actuator port 32 are all formed in an upper portion of the control valve 14. The master cylinder port 30, the brake port 31, and the actuator port 32 are formed in the upper portion of the control valve 14 in order to facilitate removal of air (air bubbles) contained in the hydraulic fluid.

The control valve 14 has a first passage 33 that connects the master cylinder port 30 and the brake port 31. A first solenoid valve 34 for opening and closing the first passage 33 is disposed in the first passage 33. The first passage 33 has a passage portion 33A that provides fluid communication between the master cylinder port 30 and the first solenoid valve 34, and a passage portion 33B that provides fluid communication between the first solenoid valve 34 and the brake port 31.

The control valve 14 has a second passage 35 that provides fluid communication between the actuator port 32 and the first passage 33. A second solenoid valve 36 for opening and closing the second passage 35 is disposed in the second passage 35. The second passage 35 is connected to the passage portion 33B of the first passage 33. The second passage 35 has a passage portion 35A that provides fluid communication between the actuator port 32 and the second solenoid valve 36, and a passage portion 35B that provides fluid communication between the second solenoid valve 36 and the passage portion 33B. The first solenoid valve 34 and the second solenoid valve 36 are controlled by the controller 28.

In the hydraulic brake system 10 of the present embodiment, the pipe 17, the first passage 33, and the pipe 18 cooperate to form a master cylinder fluid passage that connects the master cylinder 12 and the brake device 13. In addition, in the hydraulic brake system 10, the pipe 21 and the second passage 35 cooperate to form an actuator fluid passage that extends from the actuator 15 to the master cylinder fluid passage through the control valve 14.

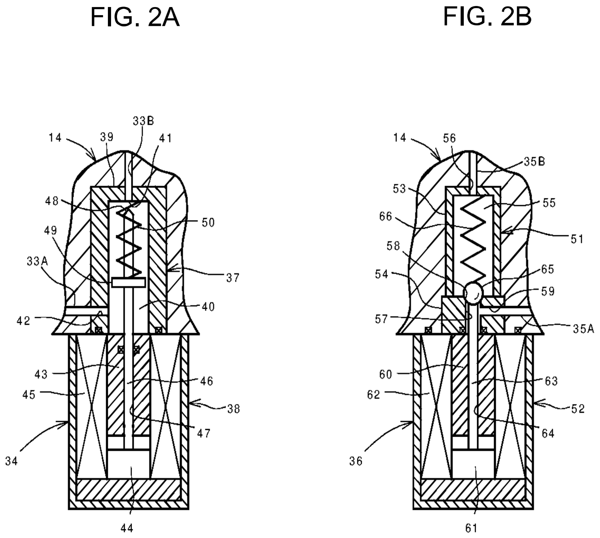

The first solenoid valve 34 is a normally open solenoid valve that closes the first passage 33 when energized and opens the first passage 33 when not energized. As illustrated in FIG. 2A, the first solenoid valve 34 includes a valve portion 37 embedded in a lower portion of the control valve 14, and a solenoid portion 38 connected to the valve portion 37 and protruding from the lower portion of the control valve 14. The valve portion 37 includes a valve housing 39 having a tubular shape. A valve chamber 40 is formed in the valve housing 39. A valve hole 41 is formed in an upper portion of the valve housing 39, and a communication hole 42 in communication with the passage portion 33A is formed in a side portion of the valve housing 39. The valve hole 41 is in communication with the passage portion 33B. A diameter of the valve hole 41 of the first solenoid valve 34 is set to a hole diameter (e.g., about 1.0 mm) generating a pressure drop that prevents hydraulic pressure from escaping to the actuator 15 until the first solenoid valve 34 closes. Although the hole diameter is set according to various conditions such as viscosity of the hydraulic fluid and passages of the hydraulic fluid in the control valve 14, the pressure drop increases as the hole diameter becomes smaller. The valve chamber 40, the valve hole 41, and the communication hole 42 form a part of the first passage 33.

The solenoid portion 38 includes a fixed iron core 43, a movable iron core 44, and an electromagnetic coil 45. A rod insertion hole 47 through which a rod 46 is inserted is formed in the center of the fixed iron core 43. One (lower) end of the rod 46 is connected to the movable iron core 44. The movable iron core 44 is movable in an axial direction of the rod 46. The electromagnetic coil 45 surrounds the fixed iron core 43 and the movable iron core 44. When the electromagnetic coil 45 is energized, the movable iron core 44 approaches the fixed iron core 43, thereby moving the rod 46 upward. A valve element 48 is provided on the other (upper) end of the rod 46. The valve element 48 is capable of closing the valve hole 41. The valve element 48 has a conical shape whose outer diameter decreases toward the tip. The rod 46 is provided with a spring receiver 49. In the valve chamber 40, a coil spring 50 corresponding to an urging member is interposed between the spring receiver 49 and the valve housing 39. The coil spring 50 applies an urging force (spring force) to the rod 46 in a direction that urges the rod 46 to open the valve hole 41. The spring force exerted by the coil spring 50 is calculated as the product of the spring constant of the coil spring 50 and the displacement from its natural length.

The second solenoid valve 36 is a normally closed solenoid valve that opens the second passage 35 when energized, and always closes the second passage 35 when not energized. As illustrated in FIG. 2B, the second solenoid valve 36 includes a valve portion 51 embedded in the lower portion of the control valve 14; and a solenoid portion 52 connected to the valve portion 51 and protruding from the lower portion of the control valve 14. The valve portion 51 includes a valve housing 53 having a tubular shape, and a valve body 54. The valve housing 53 and the valve body 54 form a valve chamber 55. A communication hole 56 in communication with the passage portion 35B of the second passage 35 is formed in an upper portion of the valve housing 53.

A through hole 57 is formed in the center of the valve body 54 so as to be in communication with the valve chamber 55. A valve hole 58 is formed on the valve chamber 55 side of the through hole 57. An inner diameter of a surface forming the valve hole 58 increases from the through hole 57 toward an opening of the valve hole 58. A diameter of the valve hole 58 of the second solenoid valve 36 is set to a hole diameter (e.g., about 1.0 mm) generating a pressure drop that prevents the hydraulic pressure from escaping to the master cylinder 12 until the second solenoid valve 36 closes. Although the hole diameter is set in accordance with various conditions such as viscosity of the hydraulic fluid and passages of the hydraulic fluid in the control valve 14, the pressure drop increases as the hole diameter becomes smaller. The valve body 54 has a communication hole 59 that provides fluid communication between the through hole 57 and the passage portion 35A. The valve chamber 55, the through hole 57, the valve hole 58, and the communication hole 59 form a part of the second passage 35.

The solenoid portion 52 includes a fixed iron core 60, a movable iron core 61, and an electromagnetic coil 62. A rod insertion hole 64 through which a rod 63 is inserted is formed in the center of the fixed iron core 60. One (lower) end of the rod 63 is connected to the movable iron core 61. The movable iron core 61 is movable in an axial direction of the rod 63. The electromagnetic coil 62 surrounds the fixed iron core 60 and the movable iron core 61. When the electromagnetic coil 62 is energized, the movable iron core 61 approaches the fixed iron core 60, thereby moving the rod 63 upward. A valve element 65 is provided on the other (upper) end of the rod 63. The valve element 65 is capable of closing the valve hole 58. The valve element 65 has a spherical shape, but it is not limited to a spherical shape and may have a conical shape, for example. The valve chamber 55 accommodates a coil spring 66 as an urging member that applies an urging force (spring force) to the valve element 65. The coil spring 66 applies an urging force (spring force) to the valve element 65 in a direction that urges the valve element 65 to close the valve hole 58. The spring force exerted by the coil spring 66 is calculated as the product of the spring constant of the coil spring 66 and the displacement from its natural length.

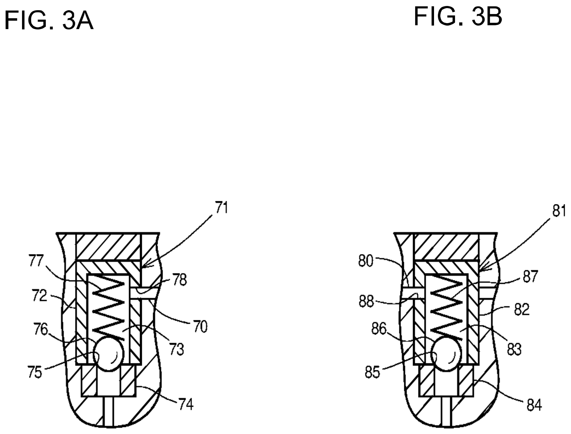

The control valve 14 has a first bypass passage 70 that branches from the passage portion 33A, bypasses the first solenoid valve 34, and is connected to the passage portion 33B; and a first check valve 71 disposed in the first bypass passage 70. As illustrated in FIG. 3A, the first check valve 71 includes a housing 72 having a valve chamber 73, a valve member 74 having a valve hole 75, and a valve element 76 and a coil spring 77 accommodated in the valve chamber 73. The housing 72 has a communication hole 78 that is in communication with the valve chamber 73. The valve element 76 has a spherical shape, and receives an urging force (spring force) from the coil spring 77 so as to close the valve hole 75. A diameter of the valve hole 75 is sufficiently greater than a diameter of the valve hole 41 of the first solenoid valve 34, for example, approximately three times the diameter of the valve hole 41. The diameter of the valve hole 75 is not limited to approximately three times the diameter of the valve hole 41, but may be 1 to 5 times the diameter of the valve hole 41.

In the first check valve 71, when the hydraulic pressure increases at the end of the first bypass passage 70 adjacent to the valve hole 75, the valve element 76 opens the valve hole 75 against the urging force (spring force) of the coil spring 77, so that the hydraulic fluid is supplied toward the brake device 13 from the master cylinder 12. The first check valve 71 allows the hydraulic fluid to flow through the first bypass passage 70 toward the brake device 13 when braking is initiated, but does not allow the hydraulic fluid to flow from the brake device 13, where the hydraulic pressure for braking is generated, toward the master cylinder 12.

The spring force exerted by the coil spring 77 of the first check valve 71 is calculated as the product of the spring constant of the coil spring 77 and the displacement from its natural length. The spring force of the coil spring 77 is sufficiently smaller than the spring force of the coil spring 50 of the first solenoid valve 34, thereby allowing the valve hole 75 to be opened by sufficiently low hydraulic pressure. The first check valve 71 is designed to reduce a valve opening pressure of the first check valve 71 by combining a large orifice diameter with a small spring force. The valve opening pressure of the first check valve 71 is substantially equal to a valve opening pressure of the second check valve 81, which will be described later. The valve opening pressure of the first check valve 71 when no hydraulic pressure for braking is generated in the brake device 13 is calculated by dividing the spring force of the coil spring 77 by an area of the valve hole 75. The valve opening pressure of the first check valve 71 when hydraulic pressure for braking is generated in the brake device 13 is calculated by adding the hydraulic pressure of the brake device 13 to the hydraulic pressure, which is calculated by dividing the spring force of the coil spring 77 by the area of the valve hole 75.

The control valve 14 has a second bypass passage 80 that branches from the passage portion 35A, bypasses the second solenoid valve 36, and is connected to the passage portion 35B; and the second check valve 81 disposed in the second bypass passage 80. As illustrated in FIG. 3B, the second check valve 81 includes a housing 82 having a valve chamber 83, a valve member 84 having a valve hole 85, and a valve element 86 and a coil spring 87 accommodated in the valve chamber 83. The housing 82 has a communication hole 88 that is in communication with the valve chamber 73. The valve element 86 has a spherical shape, and receives an urging force (spring force) from the coil spring 87 so as to close the valve hole 85. A diameter of the valve hole 85 is sufficiently greater than a diameter of the valve hole 58 of the second solenoid valve 36, for example, approximately three times the diameter of the valve hole 58. The diameter of the valve hole 85 is not limited to approximately three times the diameter of the valve hole 58, but may be 1 to 5 times the diameter of the valve hole 58.

In the second check valve 81, when the hydraulic pressure increases at the end of the second bypass passage 80 adjacent to the valve hole 85, the valve element 86 opens the valve hole 85 against the urging force (spring force) of the coil spring 87, so that the hydraulic fluid is supplied toward the brake device 13 from the actuator 15. The second check valve 81 allows the hydraulic fluid to flow through the second bypass passage 80 toward the brake device 13 when braking is initiated, but does not allow the hydraulic fluid to flow from the brake device 13, where the hydraulic pressure for braking is generated, toward the actuator 15.

The spring force exerted by the coil spring 87 of the second check valve 81 is calculated as the product of the spring constant of the coil spring 87 and the displacement from its natural length. The spring force of the coil spring 87 is smaller than the spring force of the coil spring 66 of the second solenoid valve 36, thereby allowing the valve hole 85 to be opened by sufficiently low hydraulic pressure. The valve opening pressure of the second check valve 81 is 0.05 to 10.0%, preferably 0.06 to 5.0%, more preferably 0.07 to 1.0%, of a valve opening pressure of the second solenoid valve 36. The second check valve 81 is designed, by combining a large orifice diameter with a small spring force, so as to reduce the valve opening pressure as compared with the valve opening pressure of the second solenoid valve 36. The valve opening pressure of the second check valve 81 while no hydraulic pressure for braking is generated in the brake device 13 is calculated by dividing the spring force of the coil spring 87 by an area of the valve hole 85. The valve opening pressure of the second check valve 81 when the hydraulic pressure for braking is generated in the brake device 13 is calculated by adding the hydraulic pressure of the brake device 13 to the hydraulic pressure, which is calculated by dividing the spring force of the coil spring 87 by the area of the valve hole 85. The valve opening pressure of the second solenoid valve 36 when no hydraulic pressure for braking is generated in the brake device 13 is calculated by dividing the spring force of the coil spring 66 by the area of the valve hole 58. The valve opening pressure of the second solenoid valve 36 when hydraulic pressure for braking is generated in the brake device 13 is calculated by adding the hydraulic pressure of the brake device 13 to the hydraulic pressure, which is calculated by dividing the spring force of the coil spring 66 by the area of the valve hole 58. When the hydraulic fluid is supplied from the actuator 15 to the second passage 35 and the hydraulic pressure increases in the passage portion 35A, the second check valve 81 is controlled by the controller 28 so that the second check valve 81 opens before the second solenoid valve 36 opens, thereby allowing the hydraulic fluid to be supplied to the brake device 13. The first check valve 71 and the second check valve 81 are arranged in the control valve 14 so that their opening directions correspond to the vertical direction in order to prevent air contained in the hydraulic fluid from accumulating in the valve chamber 73 and the valve chamber 83.

The hydraulic brake system 10 of the present embodiment includes a first hydraulic pressure sensor 90 that detects the hydraulic pressure in the pipe 17. The first hydraulic pressure sensor 90 transmits a signal indicating the detected hydraulic pressure in the pipe 17 to the controller 28. A second hydraulic pressure sensor 91 that detects hydraulic pressure in the pipe 21 is disposed in the pipe 21. The second hydraulic pressure sensor 91 transmits a signal indicating the detected hydraulic pressure to the controller 28. The controller 28 simultaneously issues an operation command to the actuator 15 and a valve opening command to the second solenoid valve 36. Furthermore, the hydraulic pressure in the pipe 21, detected by the second hydraulic pressure sensor 91, is fed back to the electric motor 22 of the actuator 15. Based on this feedback, the torque of the electric motor 22 is controlled such that the hydraulic pressure in the pipe 21 reaches a target pressure.

Next, the operation of the hydraulic brake system 10 according to the present embodiment will be described. Firstly, braking during the manual operation of the forklift truck will be described. When the forklift truck is traveling by the manual operation, unless the operator operates the brake pedal 19, no braking force is generated in the brake device 13. In the case where braking of the forklift truck is performed during the manual operation, the operator depresses the brake pedal 19, which causes the master cylinder 12 to discharge hydraulic fluid in accordance with the amount of depression, thereby generating the braking force in the brake device 13. Thus, in the case of braking during the manual operation, the first solenoid valve 34 opens the first passage 33 and the second solenoid valve 36 closes the second passage 35.

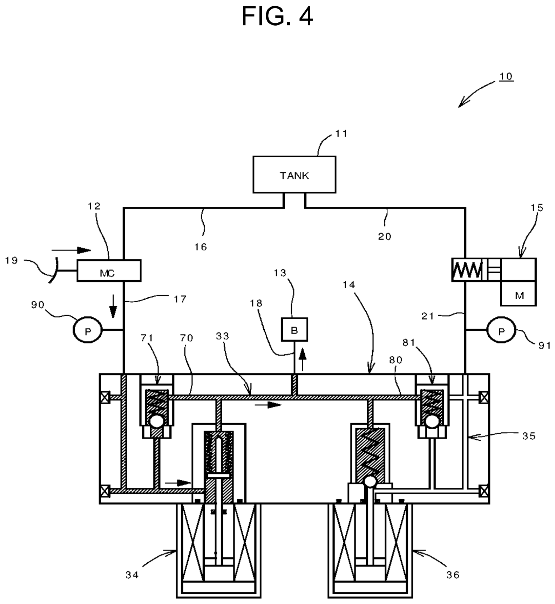

When the brake pedal 19 is depressed, the hydraulic pressure in the pipe 17 increases to a threshold value or greater. The controller 28 receives a signal indicating the hydraulic pressure in the pipe 17 detected by the first hydraulic pressure sensor 90. Therefore, when the hydraulic pressure in the pipe 17 rises to the threshold value or greater, the controller 28 turns on a brake lamp (not illustrated). Since the first solenoid valve 34 is a normally open solenoid valve and the second solenoid valve 36 is a normally closed solenoid valve, the controller 28 does not control the first solenoid valve 34 and the second solenoid valve 36. A limit switch to detect the depression of the brake pedal 19 or a stroke sensor to detect the amount of depression of the brake pedal 19 may be provided, and the brake lamp may be turned on when the limit switch or the stroke sensor detects the depression of the brake pedal 19. As illustrated in FIG. 4, even if the first solenoid valve 34 and the second solenoid valve 36 are not controlled, the hydraulic fluid discharged from the master cylinder 12 is supplied to the brake device 13 through the pipe 17, the first passage 33, and the pipe 18. The hatching in FIG. 4 indicates the hydraulic fluid in the control valve 14. In the brake device 13, a braking force is generated by the hydraulic fluid supplied from the master cylinder 12, and the forklift truck receives the braking force of the brake device 13 and slows down or stops.

When the braking force of the brake device 13 is to be released, the first solenoid valve 34 and the second solenoid valve 36 are not controlled, but the brake pedal 19 is released, which returns the hydraulic fluid to the master cylinder 12 through the first passage 33 and the pipe 17. As a result, the hydraulic pressure in the brake device 13 decreases, and hence the braking force of the brake device 13 is released. That is, the hydraulic pressure to the brake device 13 decreases in accordance with a released amount of the brake pedal 19, thereby reducing the braking force. In addition, excess hydraulic fluid is returned from the master cylinder 12 to the hydraulic fluid tank 11 through the pipe 16.

Next, braking during the automated operation of the forklift truck will be described. When the forklift truck is traveling by the automated operation, unless the actuator 15 is operated, no braking force is generated in the brake device 13. In a case where braking of the forklift truck is performed during the automated operation, the actuator 15 is activated so as to discharge hydraulic fluid in accordance with the amount of operation of the actuator 15, thereby causing a braking force to be generated in the brake device 13. Thus, in the case of braking during the automated operation, the second solenoid valve 36 opens the second passage 35 and the first solenoid valve 34 closes the first passage 33.

When braking of the forklift truck is performed during the automated operation, the controller 28 issues an operation command to the actuator 15, along with a valve opening command to the second solenoid valve 36 and a valve closing command to the first solenoid valve 34. When the actuator 15 is activated, the controller 28 receives a signal indicating the hydraulic pressure in the pipe 21 detected by the second hydraulic pressure sensor 91. The controller 28 causes the first solenoid valve 34 and the second solenoid valve 36 to be energized so that the first solenoid valve 34 is closed and the second solenoid valve 36 is opened.

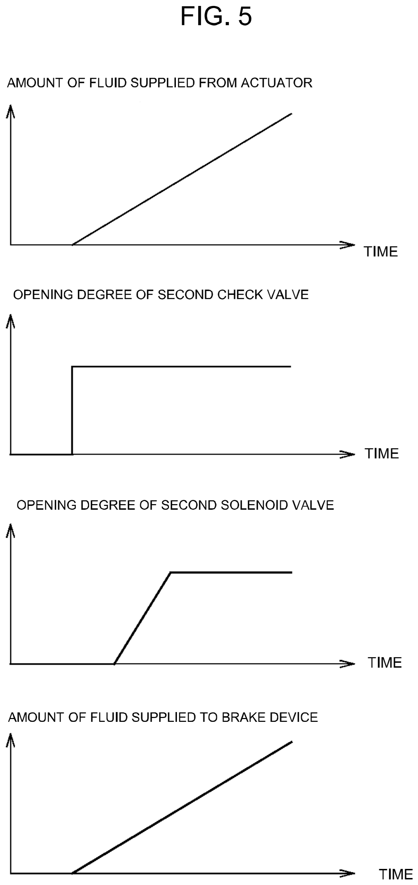

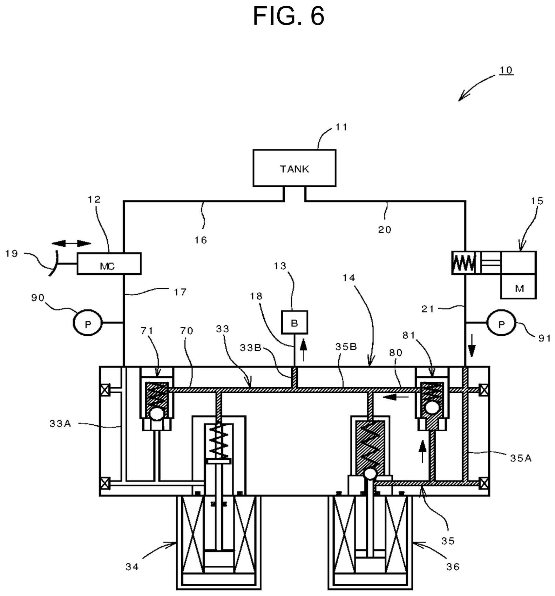

FIG. 5 shows relationships between an amount of fluid supplied from the actuator 15 and time, an opening degree of the second check valve 81 and time, an opening degree of the second solenoid valve 36 and time, and an amount of fluid supplied to the brake device 13 and time. When the amount of fluid supplied from the actuator 15 begins to increase in proportion to time, the opening degree of the second check valve 81 increases from 0% to 100% with the opening degree of the second solenoid valve 36 at 0%. That is, as illustrated in FIG. 6, the second check valve 81 opens before the second solenoid valve 36 opens, and hydraulic fluid at low pressure opens the second solenoid valve 36 and is supplied to the brake device 13. Therefore, hydraulic fluid is supplied from the second check valve 81 to the brake device 13 while the second solenoid valve 36 is opening, which prevents a delay in braking in the brake device 13 due to a delay in opening the second solenoid valve 36. Even if the first solenoid valve 34 does not close completely when the second check valve 81 opens, the pressure drop in the valve hole 41 of the first solenoid valve 34 prevents the hydraulic pressure from the actuator 15 from escaping to the master cylinder 12 until the first solenoid valve 34 closes. Then, following the opening of the second check valve 81, the second solenoid valve 36 begins to open to a fully opened state. Since the control valve 14 is provided with the second check valve 81, the amount of hydraulic fluid discharged by the actuator 15 and the amount of hydraulic fluid supplied to the brake device 13 are approximately the same (see FIG. 5). In FIG. 6, for convenience of explanation, a state in which the first solenoid valve 34 and the second solenoid valve 36 are closed is illustrated.

When the second solenoid valve 36 fully opens, the hydraulic fluid supplied from the actuator 15 is supplied to the brake device 13 through the pipe 21, the second passage 35, part of the passage portion 33B, and the pipe 18. In the brake device 13, a braking force is generated by the hydraulic fluid supplied from the actuator 15, and the forklift truck receives the braking force of the brake device 13 and slows down or stops. It is noted that, since a diameter of the valve hole 58 of the second solenoid valve 36 is smaller than that of the valve hole 85 of the second check valve 81, without providing the second check valve 81 in the control valve 14, the hydraulic fluid is supplied to the brake device 13 with a delay through the valve hole 58 having a smaller diameter at a timing when the second solenoid valve 36 opens. Thus, the hydraulic pressure of the brake device 13 increases with a delay after the opening of the second solenoid valve 36, thereby causing a braking delay. The hatching in FIG. 6 indicates the hydraulic fluid in the control valve 14.

When the braking pressure in the brake device 13 is to be released, the piston 26 of the actuator 15 is returned while the second solenoid valve 36 remains open. As a result, the hydraulic fluid is returned to the actuator 15 through the second passage 35 and the pipe 21, and the braking force in the brake device 13 is released. That is, the hydraulic pressure to the brake device 13 decreases in accordance with a released amount of the brake pedal 19, thereby reducing the braking force. In addition, excess hydraulic fluid is returned from the master cylinder 12 to the hydraulic fluid tank 11 through the pipe 16.

It is to be noted that, for example, the forklift truck can automatedly travel while an operator is on board. In this case, the controller 28 causes the actuator 15 to generate a braking force in the brake device 13. If a power failure occurs due to overcharge of the battery or harness disconnection in this state, the actuator 15, and the first solenoid valve 34 and the second solenoid valve 36 of the control valve 14 cannot receive power supply. This causes the actuator 15 to cease operation, resulting in the inability to supply hydraulic fluid, and therefore, the braking force of brake device 13 cannot be obtained. Meanwhile, the first solenoid valve 34 opens due to the power failure. Therefore, when the operator depresses the brake pedal 19, the hydraulic fluid can be supplied by the master cylinder 12 to generate a braking force in the brake device 13. In other words, even if a power failure occurs during the automated operation, the forklift truck can be stopped by the operator's operation of the brake pedal 19.

The hydraulic brake system 10 of the present embodiment offers the following effects.
(1) The control valve 14 disposed in the master cylinder fluid passage includes the first solenoid valve 34 that opens and closes the master cylinder fluid passage, and the second solenoid valve 36 that opens and closes the actuator fluid passage. Therefore, when braking is performed during the manual operation, the first solenoid valve 34 opens the master cylinder fluid passage and the second solenoid valve 36 closes the actuator fluid passage, thereby generating a braking force in the brake device 13 with the hydraulic pressure generated by the master cylinder 12. When braking is performed during the automated operation, the second solenoid valve 36 opens the actuator fluid passage and the first solenoid valve 34 closes the master cylinder fluid passage, thereby generating a braking force in the brake device 13 by the hydraulic pressure generated by the actuator 15. Thus, the brake device 13 may be appropriately operated regardless of whether operation of the forklift truck is switched to the manual operation or the automated operation.
(2) The hydraulic fluid tank 11 is connected to both the master cylinder fluid passage and the actuator fluid passage, and hence serves as a common hydraulic fluid tank for the master cylinder 12 and the actuator 15. Therefore, even if the hydraulic fluid flows back to the hydraulic fluid tank 11 unevenly through a particular fluid passage, the master cylinder 12 and the actuator 15 are sufficiently supplied with the required hydraulic fluid.
(3) The control valve 14 has the master cylinder port 30 in the master cylinder fluid passage, and the actuator port 32 in the actuator fluid passage. The master cylinder port 30 and the actuator port 32 are formed in the upper portion of the control valve 14, so that air (air bubbles), which is likely to be contained in the hydraulic fluid, may be easily removed through the master cylinder port 30 and the actuator port 32.
(4) The second hydraulic pressure sensor 91, which detects the hydraulic pressure in the actuator fluid passage, is disposed between the actuator 15 and the control valve 14 in the actuator fluid passage. The second hydraulic pressure sensor 91 is connected to the controller 28. The second hydraulic pressure sensor 91 detects the hydraulic pressure in the actuator fluid passage, so that the controller 28 can control the electric motor 22 of the actuator 15 to provide the necessary hydraulic pressure in the brake device 13.
(5) Since the valve opening pressure of the second check valve 81 is lower than the valve opening pressure of the second solenoid valve 36, the second check valve 81 opens before the second solenoid valve 36 opens, and allows the hydraulic fluid from the actuator 15 to be supplied to the brake device 13. As a result, the hydraulic pressure of the brake device 13 can be increased linearly by the second check valve 81, which opens prior to the opening of the second solenoid valve 36, thereby suppressing the delay in generating a braking force during the initial phase of braking. The valve opening pressure of the second check valve 81 is 0.05 to 10.0% of the valve opening pressure of the second solenoid valve 36, thereby suppressing the delay in generating the braking force during the initial phase of braking more reliably. If the valve opening pressure of the second check valve 81 is 0.06 to 5.0% of the valve opening pressure of the second solenoid valve 36, the effect of suppressing the delay in generating the braking force is further improved. If the valve opening pressure of the second check valve 81 is 0.07 to 1.0% of the valve opening pressure of the second solenoid valve 36, the most favorable effect of suppressing the delay in generating the braking force can be obtained. Furthermore, with the first check valve 71 installed, when the hydraulic pressure is generated by the master cylinder 12 while the first solenoid valve 34 is in a closed state, the first check valve 71 allows the hydraulic fluid to be supplied to the brake device 13 prior to the first solenoid valve 34. Therefore, the hydraulic pressure of the brake device 13 can be increased linearly by the first check valve 71, thereby suppressing the delay in generating the braking force during the initial phase of braking.
(6) The first check valve 71 and the second check valve 81 are arranged in the control valve 14 so that their opening directions correspond to the vertical direction. As compared to a case in which the first check valve 71 and the second check valve 81 are arranged in the control valve 14 so that their opening directions correspond to the horizontal direction, air may be more easily removed from the first check valve 71 and the second check valve 81. As a result, air is less likely to accumulate in the valve chamber 73 of the first check valve 71 and the valve chamber 83 of the second check valve 81. Since the first check valve 71 and the second check valve 81 are arranged in the control valve 14 so that the opening directions of the first check valve 71 and the second check valve 81 correspond to the vertical direction, the length of the control valve 14 in the horizontal direction relative to the vertical direction can be reduced.
(7) The first solenoid valve 34 is a normally open solenoid valve that always opens when de-energized. Therefore, even if a power failure occurs, the first solenoid valve 34 opens in a de-energized state, which allows the hydraulic pressure of the brake device 13 to be released to the master cylinder fluid passage. In other words, the braking pressure of the brake device 13 can be released immediately when a power failure occurs.
(8) When the hydraulic pressure is generated by the actuator 15, the hydraulic pressure from the actuator 15 does not escape to the master cylinder 12 until the first solenoid valve 34 closes due to pressure drop in the valve hole 41 of the first solenoid valve 34. When the hydraulic pressure is generated by the master cylinder 12, the pressure drop in the valve hole 58 of the second solenoid valve 36 prevents the hydraulic pressure from the master cylinder 12 from escaping to the actuator 15 until the second solenoid valve 36 closes. In other words, the hydraulic pressure of the brake device 13 does not drop even before the first solenoid valve 34 or the second solenoid valve 36 closes.
(9) In the present embodiment, the control valve 14 has the first solenoid valve 34, the second solenoid valve 36, the first check valve 71, the second check valve 81, the master cylinder fluid passage, and the actuator fluid passage. The present embodiment has a simple fluid circuit having the hydraulic fluid tank 11, the master cylinder 12, the brake device 13, the control valve 14, the actuator 15, and the pipes 16, 17, 18, 20, 21. The brake device 13 may be appropriately operated regardless of whether operation of the forklift truck is switched to the manual operation or the automated operation, without requiring any additional hydraulic equipment.

### Second Embodiment

Next, a hydraulic brake system according to a second embodiment will be described. The hydraulic brake system of the second embodiment differs from the first embodiment in that opening directions of the first check valve and the second check valve correspond to directions intersecting with the vertical direction as well as the first solenoid valve and the second solenoid valve each are a normally closed solenoid valve. In the following description, elements identical to those in the first embodiment are denoted by the same reference numerals, and a detailed description of elements and configuration identical to those in the first embodiment will be omitted.

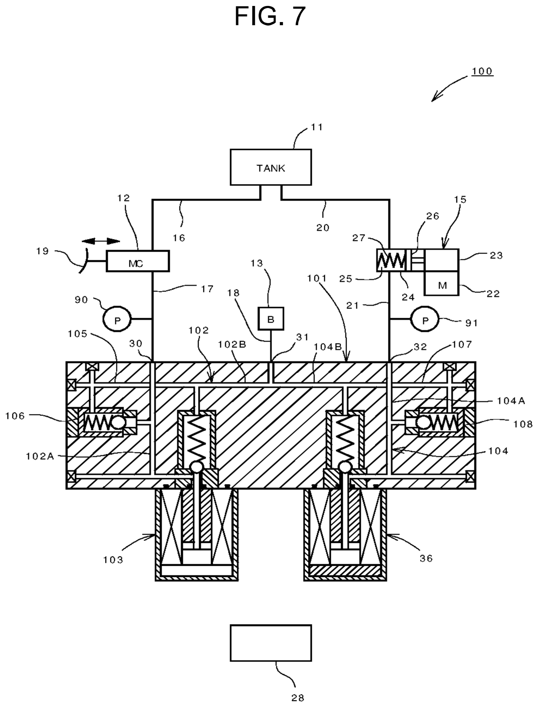

As illustrated in FIG. 7, a control valve 101 of a hydraulic brake system 100 of the second embodiment has a first passage 102 that provides fluid communication between the master cylinder port 30 and the brake port 31. A first solenoid valve 103 for opening and closing the first passage 102 is disposed in the first passage 102. The first passage 102 has a passage portion 102A that provides fluid communication between the master cylinder port 30 and the first solenoid valve 103, and a passage portion 102B that provides fluid communication between the first solenoid valve 103 and the brake port 31.

The control valve 14 has a second passage 104 that provides fluid communication between the actuator port 32 and the first passage 102. The second solenoid valve 36 for opening and closing the second passage 104 is disposed in the second passage 104. The second passage 104 is connected to the passage portion 102B of the first passage 102. The second passage 104 has a passage portion 104A that provides fluid communication between the actuator port 32 and the second solenoid valve 36, and a passage portion 104B that provides fluid communication between the second solenoid valve 36 and the passage portion 102B. The first solenoid valve 103 and the second solenoid valve 36 are controlled by the controller 28.

In the hydraulic brake system 100 of the present embodiment, the pipe 17, the first passage 102, and the pipe 18 cooperate to form the master cylinder fluid passage that connects the master cylinder 12 and the brake device 13. In addition, in the hydraulic brake system 100, the pipe 21 and the second passage 104 cooperate to form the actuator fluid passage that extends from the actuator 15 to the master cylinder fluid passage through the control valve 14.

The first solenoid valve 103 is a normally closed solenoid valve that opens the first passage 102 when energized, and closes the first passage 102 when not energized. The structure of the first solenoid valve 103 is the same as that of the second solenoid valve 36.

The control valve 14 has a first bypass passage 105 that branches from the passage portion 102A, bypasses the first solenoid valve 103, and is connected to the passage portion 102B; and a first check valve 106 disposed in the first bypass passage 105. The structure of the first check valve 106 is the same as that of the first check valve 71 of the first embodiment, and thus the description thereof will be omitted. The first check valve 106 allows the hydraulic fluid to flow through the first bypass passage 105 toward the brake device 13, but does not allow the hydraulic fluid to flow from the brake device 13 toward the master cylinder 12, thereby allowing the supply of the hydraulic fluid toward the brake device 13 with a sufficiently low hydraulic pressure. A valve opening pressure of the first check valve 106 is 0.05 to 10.0%, preferably 0.06 to 5.0%, more preferably 0.07 to 1.0%, of a valve opening pressure of the first solenoid valve 103. The first check valve 106 is designed, by combining a large orifice diameter with a small spring force, so as to reduce the valve opening pressure as compared with the valve opening pressure of the first solenoid valve 103. The valve opening pressure of the first check valve 106 when no hydraulic pressure for braking is generated in the brake device 13 is calculated by dividing the spring force of the coil spring 77 by the area of the valve hole 75. The valve opening pressure of the first check valve 106 when the hydraulic pressure for braking is generated in the brake device 13 is calculated by adding the hydraulic pressure of the brake device 13 to the hydraulic pressure, which is calculated by dividing the spring force of the coil spring 77 by the area of the valve hole 75. The valve opening pressure of the first solenoid valve 103 when no hydraulic pressure for braking is generated in the brake device 13 is calculated by dividing the spring force of the coil spring 66 by the area of the valve hole 58. The valve opening pressure of the first solenoid valve 103 when hydraulic pressure for braking is generated in the brake device 13 is calculated by adding the hydraulic pressure of the brake device 13 to the hydraulic pressure, which is calculated by dividing the spring force of the coil spring 66 by the area of the valve hole 58.

The control valve 14 has a second bypass passage 107 that branches from the passage portion 104A, bypasses the second solenoid valve 36, and is connected to the passage portion 104B; and a second check valve 108 disposed in the second bypass passage 107. The structure of the second check valve 108 is the same as that of the second check valve 81 of the first embodiment, and the description thereof will be omitted. The second check valve 108 allows the hydraulic fluid to flow through the second bypass passage 107 toward the brake device 13, but does not allow the hydraulic fluid to flow from the brake device 13 toward the actuator 15, thereby allowing the supply of hydraulic fluid toward the brake device 13 with a sufficiently low hydraulic pressure.

In the hydraulic brake system 100 of the present embodiment, when the forklift truck is traveling by the manual operation, the operator depresses the brake pedal 19 to brake the forklift truck. When the brake pedal 19 is depressed, the controller 28 receives a signal from the first hydraulic pressure sensor 90, thereby detecting that hydraulic fluid is being discharged from the master cylinder 12. Since the first solenoid valve 103 is normally closed solenoid valve, the controller 28 causes the first solenoid valve 103 to be energized and the second solenoid valve 36 not to be energized.

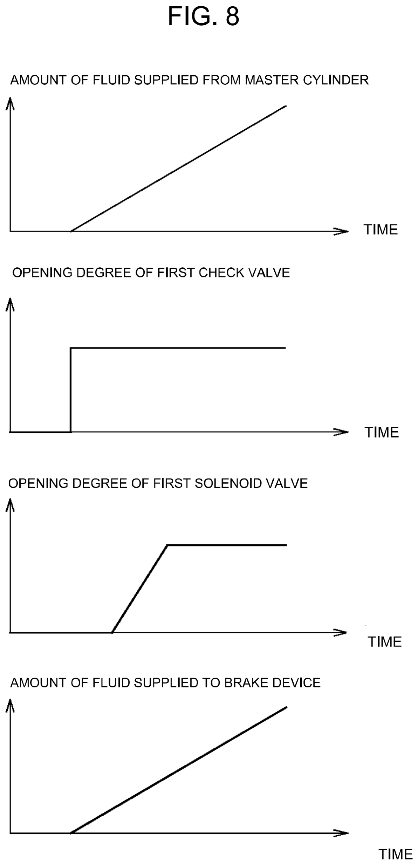

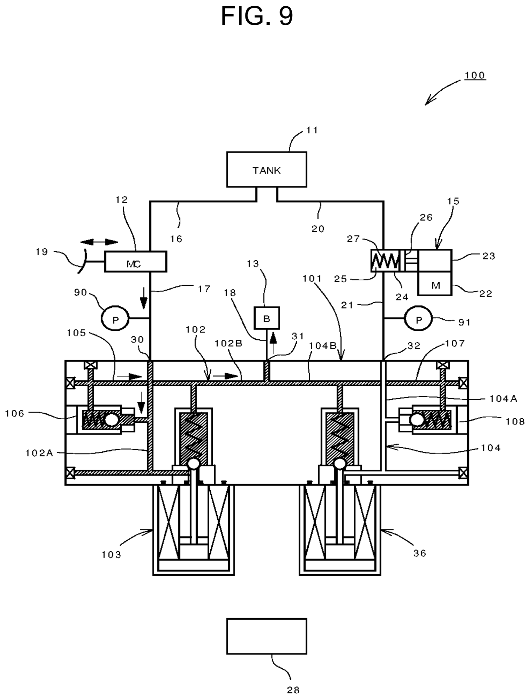

FIG. 8 shows relationships between an amount of fluid supplied from the master cylinder 12 and time, an opening degree of the second check valve 108 and time, an opening degree of the first solenoid valve 103 and time, and an amount of fluid supplied to the brake device 13 and time. When the amount of fluid supplied from the master cylinder 12 begins to increase in proportion to time, the opening degree of the first check valve 106 increases from 0% to 100% with the opening degree of the first solenoid valve 103 at 0%. That is, as illustrated in FIG. 9, the first check valve 106 opens before the first solenoid valve 103 opens, and hydraulic fluid is supplied to the brake device 13. Therefore, in the brake device 13, the braking delay caused by the delay in opening the first solenoid valve 103 is prevented. Then, following the opening of the first check valve 106, the first solenoid valve 103 begins to open to a fully opened state. Since the control valve 101 is provided with the first check valve 106, the amount of hydraulic fluid discharged by the actuator 15 and the amount of hydraulic fluid supplied to the brake device 13 are approximately the same (see FIG. 8). In FIG. 9, for convenience of explanation, a state in which the first solenoid valve 103 and the second solenoid valve 36 are closed is illustrated.

As described above, with the first check valve 106 installed, when hydraulic pressure is generated by the master cylinder 12 while the first solenoid valve 103 is in a closed state, the first check valve 106 opens prior to the opening of the first solenoid valve 103 and allows the hydraulic fluid to be supplied to the brake device 13. Therefore, the hydraulic pressure of the brake device 13 can be increased linearly by the first check valve 106, which opens prior to the opening of the first solenoid valve 103, thereby suppressing the delay in generating a braking force during the initial phase of braking.

When the braking force of the brake device 13 is to be released, the brake pedal 19 is released with the first solenoid valve 103 opened. Thus, the hydraulic fluid is returned to the master cylinder 12 through the first passage 102 and the pipe 17. As a result, the hydraulic pressure in the brake device 13 decreases, and hence the braking force of the brake device 13 is released. That is, the hydraulic pressure to the brake device 13 decreases in accordance with a released amount of the brake pedal 19, thereby reducing the braking force. In addition, excess hydraulic fluid is returned from the master cylinder 12 to the hydraulic fluid tank 11 through the pipe 16. Braking during the automated operation of the forklift truck is the same as that in the first embodiment, except that the first solenoid valve 103 is closed without being energized, so that the description thereof will be omitted.

The hydraulic brake system 100 of the second embodiment offers the same effects as the effects (1) through (5) of the first embodiment. In addition, in the second embodiment, a first hydraulic pressure sensor 90 is provided between the master cylinder 12 and the control valve 101 in the master cylinder fluid passage to detect the hydraulic pressure in the master cylinder fluid passage. The first hydraulic pressure sensor 90 is connected to the controller 28. Therefore, when the hydraulic pressure above the threshold value in the pipe 17 is detected by the first hydraulic pressure sensor 90, the controller 28 controls the first solenoid valve 103 to provide the required necessary hydraulic pressure to the brake device 13.

In addition, in the second embodiment, the opening directions of the first check valve 106 and the second check valve 108 intersect with the vertical direction. Therefore, a dimension of the control valve 101 in the vertical direction can be reduced as compared to a case where the opening directions of the first check valve 106 and the second check valve 81 correspond to the vertical direction.

### Third Embodiment

Next, a hydraulic brake system according to a third embodiment will be described. The hydraulic brake system of the third embodiment differs from the first embodiment in that the hydraulic brake system includes a third solenoid valve, in addition to the first solenoid valve and the second solenoid valve, but does not include the first check valve nor the second check valve. In the following description, elements identical to those in the first embodiment are denoted by the same reference numerals, and a detailed description of elements and configuration identical to those in the first embodiment will be omitted.

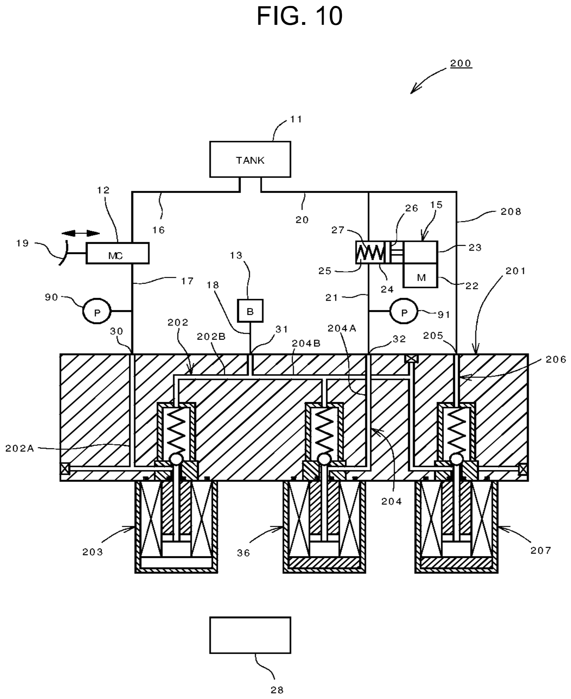

As illustrated in FIG. 10, a control valve 201 of a hydraulic brake system 200 of the third embodiment has a first passage 202 that provides fluid communication between the master cylinder port 30 and the brake port 31. A first solenoid valve 203 for opening and closing the first passage 202 is disposed in the first passage 202. The first passage 202 has a passage portion 202A that provides fluid communication between the master cylinder port 30 and the first solenoid valve 203, and a passage portion 202B that provides fluid communication between the first solenoid valve 203 and the brake port 31.

The control valve 14 has a second passage 204 that provides fluid communication between the actuator port 32 and the first passage 202. The second solenoid valve 36 for opening and closing the second passage 204 is disposed in the second passage 204. The second passage 204 is connected to the passage portion 202B of the first passage 202. The second passage 204 has a passage portion 204A that provides fluid communication between the actuator port 32 and the second solenoid valve 36, and a passage portion 204B that provides fluid communication between the second solenoid valve 36 and the passage portion 202B. The first solenoid valve 203 and the second solenoid valve 36 are controlled by the controller 28.

In the hydraulic brake system 200 of the present embodiment, the pipe 17, the first passage 202, and the pipe 18 cooperate to form the master cylinder fluid passage that connects the master cylinder 12 and the brake device 13. In addition, in the hydraulic brake system 200, the pipe 21 and the second passage 204 cooperate to form the actuator fluid passage that extends from the actuator 15 to the master cylinder fluid passage through the control valve 14.

The first solenoid valve 203 is a normally closed solenoid valve that opens the first passage 202 when energized, and closes the first passage 202 when not energized. The structure of the first solenoid valve 203 is the same as that of the second solenoid valve 36.

The hydraulic brake system 200 of the third embodiment has a fluid return passage through which the hydraulic fluid from the brake device 13 returns to the hydraulic fluid tank 11 via the control valve 201 without passing through the master cylinder 12 and the actuator 15. Specifically, the control valve 201 has a return port 205 and a third passage 206 that is connected to the return port 205 and to the passage portion 204B of the second passage 204. A third solenoid valve 207 for opening and closing the third passage 206 is disposed in the third passage 206. The hydraulic brake system 200 has a pipe 208 that connects the return port 205 to the pipe 20. Therefore, in the hydraulic brake system 200 of the third embodiment, the third passage 206 and the pipe 208 cooperate to form the fluid return passage for the hydraulic fluid from the brake device 13 to be returned to the hydraulic fluid tank 11 through the control valve 201 without passing through the master cylinder 12 and the actuator 15.

The third solenoid valve 207 is a normally closed solenoid valve that opens the third passage 206 when energized, and closes the third passage 206 when not energized. The structure of the third solenoid valve 207 is the same as that of the second solenoid valve 36. The third solenoid valve 207 is provided in the control valve 201 and is controlled by the controller 28 to open and close the fluid return passage.

In the third embodiment, when the braking force in the brake device 13 generated by the master cylinder 12 or the actuator 15 is to be released, the hydraulic fluid can be returned to the master cylinder 12 or the actuator 15 by opening the first solenoid valve 203 or the second solenoid valve 36. In addition, when the third solenoid valve 207 opens, the hydraulic fluid can be returned to the hydraulic fluid tank 11 through the pipe 18, the passage portion 204B, the third passage 206, and the pipe 208.

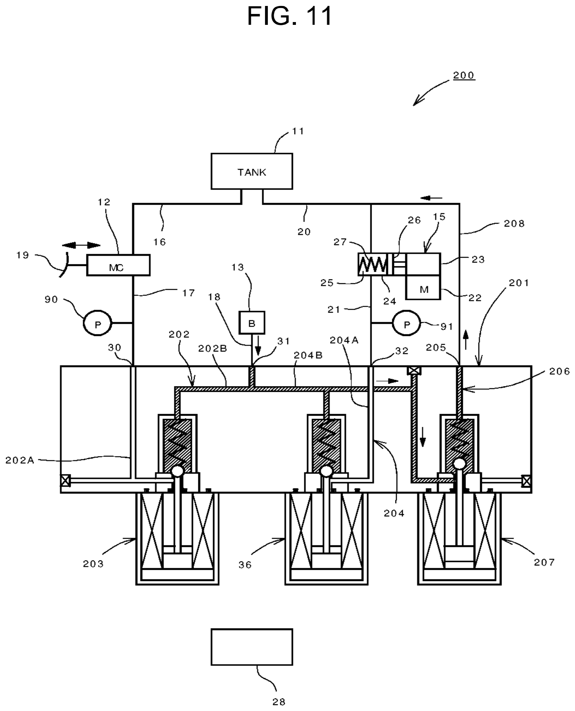

The hydraulic brake system 200 of the third embodiment offers the same effects as effects (1) through (4) of the first embodiment. In addition, in the third embodiment, the control valve 201 has the fluid return passage and the third solenoid valve 207, and the braking pressure of the brake device 13 may be released quickly by opening the third solenoid valve 207, which improves the responsiveness of the hydraulic brake system 200. As illustrated in FIG. 11, even if the first solenoid valve 203 and the second solenoid valve 36 become inoperable while the braking pressure of the brake device 13 is maintained, the braking pressure of the brake device 13 can be released by opening the third solenoid valve 207. Furthermore, since the control valve 201 does not include a first check valve and a second check valve, the configuration of the hydraulic brake system 200 can be simplified further, thereby reducing manufacturing cost. The return port 205 is formed in the upper portion of the control valve 201, which allows air (air bubbles) in the hydraulic fluid in the fluid return passage to be released more easily.

### Modification

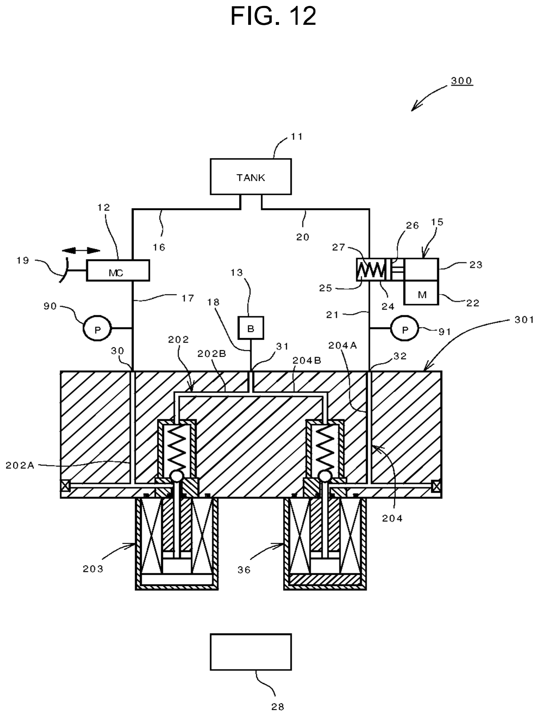

Next, the modification of the embodiments will be described. As illustrated in FIG. 12, in the modification, a control valve 301 does not have a third passage 206 and a third solenoid valve 207. Therefore, the hydraulic brake system 300 has no pipe 208. The modification offers the same effect (1) through (4) of the first embodiment. Since the control valve 301 does not have the third passage 206 and the third solenoid valve 207 in the modification, the control valve 301 can be downsized, the number of parts can be reduced, and the production cost may be reduced.

The present invention is not limited to the above-described embodiments, but may be modified in various manners, as exemplified below.

In the above-described embodiments, the hydraulic fluid tank is a common hydraulic fluid tank for the master cylinder and the actuator, but is not limited to this. For example, a dedicated hydraulic fluid tank may be provided for each of the master cylinder and the actuator.

In the above-described embodiments, as the actuator, an electric hydraulic cylinder using an electric motor as a drive source has been described, but the configuration is not limited to this. The actuator may be of any type or shape as long as it is capable of generating hydraulic pressure for the brake device.

In the above-described embodiments, the master cylinder port and the actuator port are formed in the upper portion of the control valve, but the configuration is not limited to this. The master cylinder port and the actuator port may be formed on a side portion of the control valve.

In the above embodiments, the diameter of the valve hole of the first solenoid valve is set to the hole diameter generating a pressure drop that prevents the hydraulic pressure from the actuator from escaping to the master cylinder until the first solenoid valve closes. The diameter of the valve hole of the second solenoid valve is set to the hole diameter generating the pressure drop that prevents hydraulic pressure from the master cylinder from escaping to the actuator until the second solenoid valve closes. However, the diameters of the valve holes are not limited to these.

Although the second solenoid valve is a normally closed solenoid valve in the above first embodiment, the configuration is not limited thereto. The second solenoid valve may be, for example, a normally open solenoid valve. In this case, the second solenoid valve is energized to be closed when the hydraulic fluid is supplied from the master cylinder to the brake device.

In the above-described embodiments, the hydraulic brake system for the forklift truck as an industrial vehicle is described, but the application of the present invention is not limited to this. The industrial vehicle may be, for example, a towing vehicle or a towing tractor, or may be any vehicle equipped with a brake device that can be operated with hydraulic pressure of the master cylinder and the actuator.

## Claims

1. A hydraulic brake system (10, 100, 200, 300) for an industrial vehicle, the hydraulic brake system (10, 100, 200, 300) comprising:
a brake device (13) configured to brake a wheel using hydraulic pressure;
a master cylinder (12) having a brake pedal (19), and configured to discharge hydraulic fluid in accordance with a depressed amount of the brake pedal (19) to output the hydraulic pressure; and
a master cylinder fluid passage connecting the master cylinder (12) and the brake device (13), **characterized in that**
the hydraulic brake system (10, 100, 200, 300) includes:
a control valve (14, 101, 201, 301) disposed in the master cylinder fluid passage;
an actuator (15) that outputs the hydraulic pressure;
an actuator fluid passage extending from the actuator (15) to the master cylinder fluid passage through the control valve (14, 101, 201, 301);
a first solenoid valve (34, 103, 203) provided in the control valve (14, 101, 201, 301) and configured to open and close the master cylinder fluid passage;
a second solenoid valve (36) provided in the control valve (14, 101, 201, 301) and configured to open and close the actuator fluid passage; and
a controller (28) configured to control the first solenoid valve (34, 103, 203) and the second solenoid valve (36),
when braking is performed during manual operation, the controller (28) controls the first solenoid valve (34, 103, 203) to open the master cylinder fluid passage, and the second solenoid valve (36) to close the actuator fluid passage, and
when braking is performed during automated operation, the controller (28) controls the second solenoid valve (36) to open the actuator fluid passage, and the first solenoid valve (34, 103, 203) to close the master cylinder fluid passage.

2. The hydraulic brake system (200) for the industrial vehicle according to claim 1, the hydraulic brake system (200) further comprising:
a hydraulic fluid tank (11) in which the hydraulic fluid is stored;
a fluid return passage allowing the hydraulic fluid to return from the brake device (13) to the hydraulic fluid tank (11) via the control valve (201) without passing through the master cylinder (12) and the actuator (15); and
a third solenoid valve (207) disposed in the control valve (201), and configured to be controlled by the controller (28) to open and close the fluid return passage.

3. The hydraulic brake system (10, 100, 200, 300) for the industrial vehicle according to claim 2, **characterized in that**
the hydraulic fluid tank (11) is connected to the master cylinder fluid passage and the actuator fluid passage.

4. The hydraulic brake system (10, 100, 200, 300) for the industrial vehicle according to claim 1 or 2, **characterized in that**
the control valve (14, 101, 201, 301) has:
a master cylinder port (30) in the master cylinder fluid passage; and
an actuator port (32) in the actuator fluid passage, and
the master cylinder port (30) and the actuator port (32) are formed in an upper portion of the control valve (14, 101, 201, 301).

5. The hydraulic brake system (10, 100, 200, 300) for the industrial vehicle according to claim 1 or 2, the hydraulic brake system (10, 100, 200, 300) further comprising:
a first fluid pressure sensor (90) disposed between the master cylinder (12) and the control valve (14, 101, 201, 301) in the master cylinder fluid passage, and configured to detect the hydraulic pressure in the master cylinder fluid passage; and
a second fluid pressure sensor (91) disposed between the actuator (15) and the control valve (14, 101, 201, 301) in the actuator fluid passage, and configured to detect the hydraulic pressure in the actuator fluid passage, **characterized in that**
the first fluid pressure sensor (90) and the second fluid pressure sensor (91) are connected to the controller (28).

6. The hydraulic brake system (10, 100) for the industrial vehicle according to claim 1 or 2, **characterized in that**
the control valve (14, 101) has:
a master cylinder port (30) connected to the master cylinder (12);
an actuator port (32) connected to the actuator (15);
a brake port (31) connected to the brake device (13);
a first passage (33, 102) in which the first solenoid valve (34, 103) is disposed, the first passage (33, 102) forming a part of the master cylinder fluid passage, and providing fluid communication between the master cylinder port (30) and the brake port (31);
a second passage (35, 104) in which the second solenoid valve (36) is disposed, the second passage (35, 104) forming a part of the actuator fluid passage and providing fluid communication between the actuator port (32) and the first passage (33, 102);
a first bypass passage (70, 105) bypassing the first passage (33, 102, 202);
a second bypass passage (80, 107) bypassing the second passage (35, 104);
a first check valve (71, 106) disposed in the first bypass passage (70, 105) and allowing the hydraulic fluid to be supplied from the master cylinder (12) to the brake device (13); and
a second check valve (81, 108) disposed in the second bypass passage (80, 107) and allowing the hydraulic fluid to be supplied from the actuator (15) to the brake device (13), and
a valve opening pressure of each of the first check valve (71, 106) and the second check valve (81, 108) is lower than a valve opening pressure of each of the first solenoid valve (34, 103) and the second solenoid valve (36).

7. The hydraulic brake system (10, 100) for the industrial vehicle according to claim 6, **characterized in that**
the valve opening pressure of each of the first check valve (71, 106) and the second check valve (81, 108) is 0.05 to 10.0% of the valve opening pressure of each of the first solenoid valve (34, 103) and the second solenoid valve (36).

8. The hydraulic brake system (10) for the industrial vehicle according to claim 6, **characterized in that**
the first check valve (71) and the second check valve (81) are arranged in the control valve (14) so that an opening direction of each of the first check valve (71) and the second check valve (81) corresponds to a vertical direction.

9. The hydraulic brake system (10, 100, 200) for the industrial vehicle according to claim 1 or 2, **characterized in that**
the first solenoid valve (34, 103, 203) is a normally open solenoid valve that is normally open when not energized.

10. The hydraulic brake system (10, 100, 200, 300) for the industrial vehicle according to claim 1 or 2, **characterized in that**
a diameter of the valve hole of the first solenoid valve (34, 103, 203) is set to a hole diameter generating a pressure drop that prevents the hydraulic pressure from the actuator (15) from escaping to the master cylinder (12) until the first solenoid valve (34, 103, 203) closes, and
a diameter of the valve hole of the second solenoid valve (36) is set to a hole diameter generating a pressure drop that prevents the hydraulic pressure from the master cylinder (12) from escaping to the actuator (15) until the second solenoid valve (36) closes.
